# EUROPÄISCHE PATENTANMELDUNG

(11) **EP 2 014 734 A1**
(43) Veröffentlichungstag der Anmeldung: **14.01.2009**
(21) Anmeldenummer: 08104744.1
(22) Anmeldetag: 14.07.2008
(51) Int. Cl.: C09J 7/00, C09J 7/02, C09J 9/00, C09J 11/00, C08J 5/12

(54) **Klebeband**

(30) Priorität: 12.07.2007 CH 11302007
(71) Anmelder: Berger, Peter Georg, 9100 Herisau (CH)
(72) Erfinder: Berger, Peter Georg, CH-9100, Herisau (CH)
(74) Vertreter: Hasler, Erich

(57) **Zusammenfassung**

Ein Klebeband besitzt wenigstens einen ersten Bereich mit einem druckempfindlichen Selbstkleber und einen zweiten Bereich mit einem wärmeaktivierbaren Kleber. Der zweite Bereich mit dem wärmeaktivierbaren Kleber enthält induktiv aktivierbare Füllstoffpartikel. Diese können induktiv erwärmt werden, um den wärmeaktivierbaren Kleber (z.B. Schmelzkleber oder reaktiver Kleber) zu aktivieren. Die unterschiedlichen Klebstoffe sind, sofern sie in der selben Kleberschicht vorliegen, durch Anordnung ihrer Bereiche nebeneinander getrennt, und sofern sie in zwei verschiedenen Kleberschichten vorliegen, durch eine Trägerfolie getrennt, um eine Vermischung beim Erwärmen der wärmeaktivierbaren Kleberschicht zu vermeiden.

## Beschreibung

Die vorliegende Erfindung betrifft ein beidseitig klebendes Klebeband mit wenigstens einer Kleberschicht, welches beispielsweise für die Verklebung von Fensterglas in einem Rahmen und eines Fassadenelements auf einem Träger verwendet werden kann.

Die DE-A-199 51 599 offenbart ein Verfahren für die reversible Trennung von Klebeverbunden durch Anlegen elektromagnetischer Wechselfelder. Die Kleberschicht besteht aus mindestens einer Primärschicht, die nanoskalige ferro- oder ferrimagnetische oder supraparamagnetische Teilchen enthält. Durch die elektromagnetischen Wechselfelder werden in der Primärschicht des Klebeverbundes lokal hohe Wärmemengen generiert. Dieser lokale Wärmeeintrag bewirkt bei angrenzenden thermoplastischen Klebstoffschichten ein Erweichen des Bindemittels.

Die DE-A-102 10 661 offenbart eine Klebstoffzusammensetzung mit induktiv erwärmbaren Füllstoffpartikeln zur Herstellung von Duromeren. Die Zusammensetzung enthält Polymere oder Reaktionsharze, mit welchen strukturelle oder semistrukturelle Verbindungen hergestellt werden können. Die Füllstoffpartikel können auch dazu dienen, die Klebeverbindungen durch Erwärmung wieder zu lösen.

Aus der EP 1 710 286 ist eine Verstärkungsmatte bekannt. Diese besitzt eine Verstärkungsstruktur mit einer einseitig drucksensitiven Kleberschicht darauf. Die Verstärkungsstruktur besteht aus einem Vlies von wenigstens 3 mm Stärke. Im Vlies ist eine polymerisierbare Zusammensetzung aufgenommen. Die Kleberschicht kann Bereiche mit einem drucksensitiven Kleber und Bereiche mit einer aktivierbaren Kleberzusammensetzung aufweisen. Die polymerisierbare Zusammensetzung wird typischerweise durch Erhitzung ausgehärtet. Für den Fall, dass die drucksensitive Kleberschicht während der Aushärtung der polymerisierbaren Zusammensetzung durch die Erhitzung zuviel an Haftkraft verliert, wird in dieser Schrift angeregt, Klemmen zu verwenden, um die Matte an der gewünschten Stelle zu halten.

Aus der WO 01/12743 ist eine flexible Klebefolie bekannt, die zwei unterschiedliche Kleberschichten besitzt. Auf einem flexiblen, bedruckbaren Träger ist eine erste Kleberschicht mit ferromagnetischen Füllstoffen angeordnet, die eine geringere Haftkraft aufweist. Auf dieser ersten Kleberschicht ist eine zweite Kleberschicht grösserer Haftkraft angeordnet. Sie dient der wiederentfernbaren Befestigung der Klebefolie an einem Untergrund. An der Klebefolie können daher Permanentmagnete haften. Es wird angeregt, in einer solche Klebefolie einen thermoaktivierbaren Kleber zu verwenden, falls der polymerische Träger extrusionsbeschichtet oder in der Form beschichtet (in-mold laminated) ist.

Aus der WO 94/08781 ist ein drucksensitives Klebeband bekannt, das einen Kernstreifen aufweist, der aus härtbarem, strukturellem Kleber besteht. Der härtbare Kleber trägt auf wenigstens einer Seite den drucksensitiven Kleber als durchgehende oder unterbrochene Schicht. Der drucksensitive Kleber gibt anfänglich Halt zwischen einem Träger und dem Kernstreifen. Der Kernstreifen wird zur strukturellen Verklebung erhitzt und dadurch ausgehärtet. Dabei wird der drucksensitive Kleber in der thermoaktivierbaren und gegebenenfalls mittels elektromagnetischer Induktion aushärtbaren Schicht aufgenommen. Ein solches Klebeband hat den Vorteil, dass es vorerst aufgebracht werden kann und die Verklebung provisorisch herstellt. Es soll die beiden mit dem Klebeband zu verbindenden Träger für die Zeit der Aushärtung des statischen Klebers zusammenhalten.

Es wird indes angenommen, dass die Aktivierung der thermoaktivierbaren Kernschicht zu einem Haftungsverlust bei der drucksensitiven Kleberschicht führt, zumal die Kernschicht verflüssigt und die drucksensitive Kleberschicht von der Kernschicht aufgenommen wird.

Aufgabe der vorliegenden Erfindung ist es, ein Klebemittel vorzuschlagen, mit welchem zwei Substrate rasch und dadurch kosteneinsparend dauerhaft miteinander verbunden werden können. Ein weiteres Ziel ist es, ein Klebemittel zur Verfügung zu stellen, mit welchem unterschiedliche Materialien mit unterschiedlichen Ausdehnungskoeffizienten dauerhaft verbunden werden können. Noch ein Ziel ist es, ein Fenster oder eine Fassade vorzuschlagen, bei welchem eine Verglasung mit einem Rahmen oder Fensterflügelrahmen, resp. ein Fassadenelement mit einer Unterkonstruktion oder einem entsprechenden Verbindungsteil verklebt ist.

Erfindungsgemäss wird die Aufgabe durch ein doppelseitig klebendes Klebeband gemäss Anspruch 1 gelöst. Das Klebeband weist in bekannter Weise wenigstens einen ersten Bereich mit einem druckempfindlichen Selbstkleber und wenigstens einen zweiten Bereich mit einem wärmeaktivierbaren Kleber auf. Der wärmeaktivierbare Kleber enthält in ebenfalls bekannter Weise induktiv aktivierbare Füllstoffpartikel. Dieses Klebeband hat den grossen Vorteil, dass durch induktive Erwärmung eine strukturelle Klebeverbindung hergestellt werden kann, welche eine höhere Verbundfestigkeit als diejenige von selbstklebenden Hochleistungs-Montageklebebändem hat. Durch das Vorhandensein einer Selbstklebeschicht kann das Klebeband vorgängig positioniert werden. Das Klebeband hat zudem den grossen Vorteil gegenüber den Hochleistungs-Montageklebebändern, dass die zu verklebenden Substrate nicht mit Primer vorbehandelt werden müssen. Das Klebeband mit Schmelzklebstoff bietet zudem die aussergewöhnliche Möglichkeit einer vereinfachten Demontage für das Recycling und Reparaturarbeiten.

Erfindungsgemäss liegen die ersten und zweiten Bereiche, sofern diese in der selben Lage vorliegen, nebeneinander vor und sind dadurch voneinander so getrennt, dass sie sich beim Aktivieren des thermisch aktivierbaren Klebstoffs nicht oder höchstens im Grenzbereich vermischen. Dies hat den Vorteil, dass die Eigenschaften eines selbstklebenden Klebebandes mit denjenigen eines Reaktiv- und/oder Schmelzklebers in ein und derselben Kleberschicht kombiniert sein können und auch während der Erhitzung des thermisch aktivierbaren Klebers erhalten bleiben. Erfindungsgemäss sind die ersten und zweiten Bereiche, sofern diese in zwei übereinander angeordneten Kleberschichten vorliegen, durch ein Trägerband getrennt. Dies hat den Vorteil, dass auf einer Seite des Klebebandes eine selbstklebende Schicht und auf der anderen Seite eine reaktive Kleberschicht oder eine Schmelzklebstoffschicht vorliegen kann, ohne dass sich diese beim Aktivieren des thermisch aktivierbaren Klebstoffs vermischen oder beeinflussen.

Vorteilhaft haben die aktivierbaren Füllstoffpartikel ferromagnetische, ferrimagnetische oder superparamagnetische Eigenschaften. Füllstoffpartikel mit diesen Eigenschaften können in bekannter Weise induktiv erwärmt werden. Als Füllstoffpartikel kommen auch elektrisch leitfähige Polymere, Russe, Graphit, Metallpulver oder Metallfasern in Frage. Vorzugsweise werden als induktiv aktivierbare Füllstoffpartikel Eisenpulver, Magnetitpulver, superparamagnetisches Eisenoxid oder Mangan-Zink-Eisenoxid eingesetzt. Die Füllstoffpartikel können vorzugsweise durch ein elektrisches, magnetisches oder elektromagnetisches Feld oder ein elektrisches, magnetisches oder elektromagnetisches Wechselfeld aktiviert resp. erwärmt werden. Vorteilhaft liegen die Füllstoffpartikel als Nanopartikel vor. Dies hat den Vorteil, dass eine gute Verteilung in der Kleberschicht und damit eine gleichmässige Erwärmung der Kleberschicht erreicht werden.

Zweckmässigerweise hat die Kleberschicht (im Falle eines einschichtigen Klebebandes) oder haben die Kleberschichten und die Trägerfolie zusammen (im Falle eine dreischichtigen Klebebandes) eine Stärke zwischen 0.5 und 3 mm. Klebebänder einer solchen Stärke haben den Vorteil, dass Scherkräfte infolge unterschiedlicher Ausdehnungskoeffizienten absorbiert werden können, ohne dass die Klebeverbindung reisst. Vorteilhaft ist bei zwei Kleberschichten eine nicht-metallische Trägerfolie vorgesehen. Dabei kann die Trägerfolie auch mit Fasern verstärkt sein.

Gemäss einer bevorzugten Ausführungsform ist der erste Bereich mit dem Selbstkleber auf der einen Seite der Trägerfolie und der zweite Bereich mit dem wärmeaktivierbaren Kleber auf der anderen Seite der Trägerfolie vorgesehen. Gemäss einer anderen Ausführungsform ist beidseitig ein wärmeaktivierbarer Kleber vorgesehen, wobei mindestens eine Seite auch erste Bereiche mit dem Selbstkleber aufweist. Diese Ausführungsform hat den Vorteil, dass in einer Kleberschicht Selbstklebebereiche und Reaktiv- oder Schmelzklebebereiche kombiniert vorliegen und somit eine vorgängige Positionierung des Klebebandes und eine nachgängige strukturelle Verklebung möglich sind.

Gegenstand der vorliegenden Erfindung ist auch ein Fenster mit Verglasung, welche mittels eines erfindungsgemässen Klebebandes am Fensterrahmen oder Fensterflügelrahmen befestigt ist. Der Einsatz eines Klebebandes hat den Vorteil, dass die Werkteile vorgängig selbstklebend ausgerüstet und in einem weiteren Arbeitsschritt positionsgenau und rasch verklebt werden können. Die bevorzugte Variante eines Klebebandes für diese Anwendung ist ein beidseitiges Klebeband mit beidseitig selbstklebenden Bahnen, welche eine sofortige Haftung und somit eine Handlingsicherheit für die Produktion aufweist. Ein schneller Arbeitsablauf und eine randgenaue Positionierung ist damit gewährleistet. Durch die zusätzlich aktivierbaren, vorzugsweise reaktiven Klebebahnen gewinnt die Verklebung massiv an Verbundfestigkeit, welche bei Fenstern über Jahre hinweg gewährleistet sein muss.

Ein weiterer Gegenstand der vorliegenden Erfindung ist auch eine Fassade, bestehend aus Fassadenelementen, welche mittels eines erfindungsgemässen Klebebandes an der Unterkonstruktion resp. am entsprechenden Verbindungsteil befestigt ist. Der Einsatz eines Klebebandes hat den Vorteil, dass die Werkteile vorgängig selbstklebend ausgerüstet und in einem weiteren Arbeitsschritt positionsgenau und rasch verklebt werden können. Ausserdem kann die Kleberschicht die unterschiedlichen Ausdehnungen der Materialien aufnehmen.

Nachfolgend wird die Erfindung unter Bezugnahme auf die Figuren beispielhaft erläutert. Es zeigt:
- Figur 1: schematisch und im Querschnitt ein erstes Ausführungsbeispiel eines Klebebandes, bei welchem Bahnen eines wärmeaktivierbaren Klebers, sowie Bahnen eines Haftklebstoffes vorgesehen sind;
- Figur 2: schematisch und im Querschnitt ein zweites Ausführungsbeispiel eines doppelseitigen Klebebands mit einer Trägerfolie und beidseitig aufgebrachten Kleberschichten; einseitig mit einem wärmeaktivierbaren Kleber, einseitig mit einem Haftkleber.
- Figur 3: schematisch und im Querschnitt ein drittes Ausführungsbeispiel eines doppelseitigen Klebebandes mit einer selbstklebenden Kleberschicht auf der Unterseite, und einer wärmeaktivierbaren Kleberschicht auf der Oberseite, welche von selbstklebenden Bahnen durchsetzt ist.
- Figur 4: schematisch und im Querschnitt ein viertes Ausführungsbeispiel eines doppelseitigen Klebebandes; beidseitig sowohl mit Bereichen einer wärmeaktivierbaren Kleberschicht als auch mit selbstklebenden Bahnen
- Figur 5: schematisch und im Querschnitt ein fünftes Ausführungsbeispiel eines Klebebands ohne Trägerfolie; das Bahnen mit wärmeaktivierbarem Kleber und Bahnen mit Haftkleber aufweist.
- Figur 6: schematisch und im Schnitt eine Detailansicht eines Fensters mit einer geklebten Verglasung.

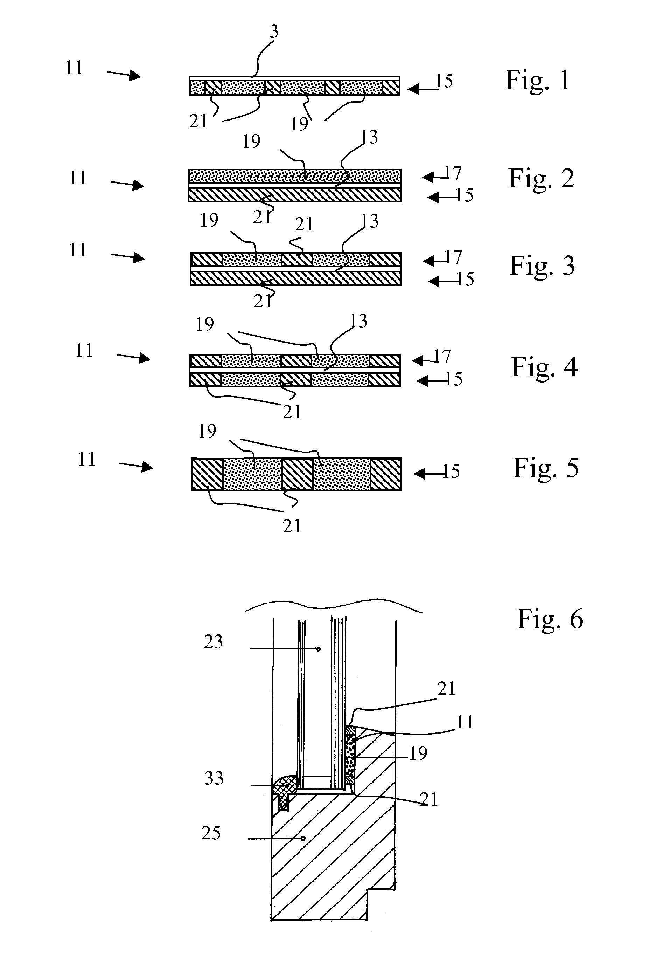

Figur 1 zeigt schematisch ein Klebeband 11 mit einer Trennfolie 3 und einer Kleberschicht 15 an deren Unterseite. Die Kleberschicht 15 besteht in ersten Bereichen 21 aus einem selbstklebenden Kleber und in zweiten Bereichen 19 aus einem Kleber, welcher entweder durch Wärme aktiviert eine chemische Polymerisationsreaktion eingeht oder durch Wärme verflüssigt wird, sodass eine feste und dauerhafte Verklebung zweier Substrate erfolgen kann.

Der wärmeaktivierbare Kleber kann der Gruppe der Polyester, Polyether, Polyamide, Polyurethane, Polyacrylate, Polymethylacrylate, Polyvinylacetate, Vinylacetatcopolymere, Propylen-Vinylacetatcopolymere, Styrol-Acrylat- und Styrol-Methacrylacopolymere angehören. Dieser Kleber ist durchsetzt mit induktiv anregbaren Partikeln, insbesondere magnetischen und vorzugsweise ferromagnetischen Partikeln. Die Partikel können mindestens eines der nachfolgend angeführten Elemente enthalten: Fe, Co, Ni, Cr, Mo, W, V, Nb, Ta, Ce, Pr, Nd, Pm, Sm, Eu, Gd, Tb, Dy, Ho, Er, Tm, Yb, Lu oder Legierungen aus zwei oder mehreren der vorerwähnten Elemente. Bevorzugte Partikel sind Ferrite, Magnetite, Wolframite und Ferberite.

Das Klebeband weist in der ersten Kleberschicht 15 erste Bereiche 21 mit einem Selbstkleber auf. Der erste Bereich kann in Gestalt von Bahnen oder von isolierten Stellen (spots) vorliegen. Der erste Bereich dient dazu, das Klebeband an einem ersten Substrat zu fixieren, damit ein zweites Substrat, nach Abziehen der Trennfolie 3, am ersten Substrat befestigt werden kann. Nach der Fixierung der Substrate in der richtigen Position wird der wärmeaktivierbare Kleber in den zweiten Bereichen 19 erwärmt, so dass eine strukturelle Klebeverbindung zwischen den Substraten gebildet ist.

Zur Erwärmung des thermoaktivierbaren Klebers können Geräte eingesetzt werden, wie sie z.B. in der US 6, 509,555, US 2004/0050839 oder US 2007/0023422 beschrieben sind. Mit Hilfe dieser Geräte können die induktiv aktivierbaren Füllstoffpartikel angeregt und der sie umgebende Kleber erwärmt werden, um eine dauerhafte Verklebung zu erreichen.

In Figur 2 ist ein doppelseitiges Klebeband 11 gezeigt mit einer Trägerfolie 13, welche an gegenüberliegenden Seiten eine aus wärmeaktivierbarem Kleber bestehende erste Kleberschicht 15 und eine aus selbstklebendem Kleber bestehende zweite Kleberschicht 17 aufweist. Die Selbstkleberschicht 17 und die wärmeaktivierbare Kleberschicht 15 erstrecken sich dabei vollflächig über die gesamte Trägerfolie 13. Das Ausführungsbeispiel gemäss Fig. 3 unterscheidet sich von demjenigen von Fig. 2 dadurch, dass die zweite Kleberschicht 17 durch voneinander beabstandete erste Bahnen 19 des wärmeaktivierbaren Klebers und an diese angrenzende zweite Bahnen 21 des selbstklebenden Klebers gebildet ist.

Das Ausführungsbeispiel gemäss Fig. 4 ist dadurch gekennzeichnet, dass eine Trägerfolie beidseitig zweite Bahnen 19 des wärmeaktivierbaren Klebers und erste Bahnen 21 des selbstklebenden Klebers aufweist.

Das Ausführungsbeispiel gemäss der Fig. 5 ist dadurch gekennzeichnet, dass das Klebeband 11 als so genanntes Transferklebeband, d.h. ohne Trägerfolie, ausgebildet ist. Das Klebeband besteht aus einer einzigen Schicht 15, welche aus zwei Bahnen 19 des wärmeaktivierbaren Klebers sowie aus an diese angrenzende drei Bahnen 21 des selbstklebenden Klebers gebildet ist.

Bei den Ausführungsbeispielen gemäss Figuren 1, 4 und 5 sind an beiden Oberflächen des Klebebandes 11 sowohl selbstklebende als auch thermisch aktivierbare Klebebereiche vorhanden. Diese Bereiche sind übereinstimmend bezüglich ihrer Ausdehnung und Platzierung. Dadurch liegen über die Dicke des Klebebandes durchgehende, wenn auch in Figur 4 durch eine Trägerfolie getrennte, Bereiche mit thermisch aktivierbarem Kleber und durchgehende Bereiche mit selbstklebendem Kleber vor. Dadurch kann die Erwärmung des selbstklebenden Klebers in den Bereichen 21 bei der thermischen Aktivierung der Bereiche 19 gering gehalten werden.

Ein Anwendungsbeispiel für das erfindungsgemässe Klebeband ist die Befestigung einer Isolierverglasung 23 an einem Fensterflügelrahmen 25 (s. Fig. 6). Am Fensterflügelrahmen 25 ist ein Klebeband 11 angeordnet, welches das innere Fensterglas der Isolierverglasung 23 mit dem Fensterflügelrahmen 25 verbindet. Ein in der Leibung des Fensterflügelrahmens angeordnetes Kunststoffprofil 33 dichtet als Dichtlippe die Isolierverglasung gegenüber dem Fensterflügelrahmen ab.

Der Einsatz eines Klebebandes 11 hat den Vorteil, dass dieses vorgängig am Fensterflügelrahmen angeordnet werden kann und somit eine genaue Positionierung der Verklebung ermöglicht. Ausserdem ist eine definierte Kleberschichtstärke gewährleistet. Im Vergleich zu den bekannten Hochleistungs-Montagebändern hat das erfindungsgemässe Klebeband den Vorteil, dass durch die wärmeaktivierbare Kleberschicht eine höhere Verbundfestigkeit erreicht werden kann. Ausserdem sind weniger Anpressdruck und weniger Vorbehandlung nötig. Ein grosser Vorteil des Klebebandes ist, dass durch eine relativ dicke Kleberschicht von 1 bis 3 mm die unterschiedlichen Ausdehnungskoeffizienten zwischen dem Material des Fensterflügelrahmens und der Isolierverglasung aufgefangen werden können.

Das erfindungsgemässe Klebeband wird in Form von Rollen bereitgestellt. Unabhängig davon, ob es sich um ein einschichtiges Transferklebeband oder ein doppelseitiges Klebeband mit Trägerfolie handelt, wird eine Abdeck- oder Trennfolie 3 eingesetzt, um die aufgerollten Klebebahnen voneinander zu trennen, sobald selbstklebende Bereiche vorhanden sind. Die Kleberschichten selbst liegen bei Raumtemperatur in einem festen, nicht-fliessfähigen Zustand vor.

### Legende:

- 3: Trennfolie
- 11: Klebeband
- 13: Trägerfolie
- 15: erste Kleberschicht
- 17: zweite Kleberschicht
- 19: Bahnen oder Bereiche mit wärmeaktivierbarem Kleber
- 21: Bahnen oder Bereiche mit selbstklebendem Kleber
- 23: Isolierverglasung
- 25: Fensterflügelrahmen
- 33: Dichtlippe

## Patentansprüche

1. Beidseitig klebendes Klebeband (11) mit einer oder zwei Kleberschichten (15,17), welches Klebeband (11) wenigstens einen ersten Bereich (21) mit einem druckempfindlichen Selbstkleber und wenigstens einen zweiten Bereich (19) mit einem wärmeaktivierbaren Kleber aufweist, **dadurch gekennzeichnet, dass** der wärmeaktivierbare Kleber induktiv aktivierbare Füllstoffpartikel enthält und der erste Bereich (21) und der zweite Bereich (19) von einander getrennt sind, nämlich durch ihre Anordnung nebeneinander, insofern die Bereiche in derselben Kleberschicht (15,17) vorhanden sind, und durch eine Trägerfolie (13), insofern die Bereiche in übereinander angeordneten Kleberschichten (15,17) vorhanden sind.

2. Klebeband nach Anspruch 1, **dadurch gekennzeichnet, dass** eine nicht-metallische Trägerfolie (13) und beidseitig dieser Trägerfolie (13) je eine Kleberschicht (15,17) vorgesehen ist.

3. Klebeband gemäss Anspruch 2, **dadurch gekennzeichnet, dass** die Trägerfolie (13) mit Fasern verstärkt ist.

4. Klebeband nach Anspruch 1, ausgebildet als ein Transferklebeband mit einer einzigen Kleberschicht (15).

5. Klebeband gemäss einem der Ansprüche 1 bis 4, **dadurch gekennzeichnet, dass** die aktivierbaren Füllstoffpartikel ferromagnetische, ferrimagnetische, superparamagnetische oder piezoelektrische Eigenschaften haben.

6. Klebeband gemäss einem der Ansprüche 1 bis 5, **dadurch gekennzeichnet, dass** die aktivierbaren Füllstoffpartikel elektrisch leitfähige Polymere, Russe, Graphit, Metallpulver oder Metallfasern sind.

7. Klebeband gemäss einem der Ansprüche 1 bis 6, **dadurch gekennzeichnet, dass** die aktivierbaren Füllstoffpartikel auf Eisenpulver, Magnetitpulver, superparamagnetischem Eisenoxid oder Mangan-Zink-Eisenoxid beruhen.

8. Klebeband gemäss einem der Ansprüche 1 bis 7, **dadurch gekennzeichnet, dass** die Füllstoffpartikel durch ein elektrisches, magnetisches oder elektromagnetisches Feld oder ein elektrisches, magnetisches oder elektromagnetisches Wechselfeld aktivierbar sind.

9. Klebeband gemäss einem der Ansprüche 1 bis 8, **dadurch gekennzeichnet, dass** die Füllstoffpartikel als Nanopartikel vorliegen.

10. Klebeband gemäss einem der Ansprüche 1 bis 9, **dadurch gekennzeichnet, dass** das Klebeband eine Stärke zwischen 0.5 mm und 3 mm hat.

11. Fenster mit einer in einem Fensterflügel (25) angeordneten Verglasung (23),
**dadurch gekennzeichnet,**
**dass** die Verglasung (23) mittels eines Klebebandes (11) gemäss einem der Ansprüche 1 bis 10 befestigt ist.

12. Fassade bestehend aus einer Mehrzahl von flächigen Fassadenelementen,
**dadurch gekennzeichnet,**
**dass** die Fassadenelemente mittels eines Klebebandes (11) gemäss einem der Ansprüche 1 bis 10 an einer Unterkonstruktion befestigt sind.
